# EUROPEAN PATENT SPECIFICATION

(11) **EP 2 268 060 B1**
(45) Date of publication and mention of the grant of the patent: **07.10.2015**
(21) Application number: 09820669.1
(22) Date of filing: 04.03.2009
(51) Int. Cl.: H04R 9/02, H04R 31/00, H04M 3/00, H04R 9/06

(54) **MULTIFUNCTIONAL SPEAKER**
MULTIFUNKTIONELLER LAUTSPRECHER
HAUT-PARLEUR MULTIFONCTION

(30) Priority: 15.10.2008 KR 20080101205
(43) Date of publication of application: 29.12.2010
(73) Proprietor: BSE Co., Ltd., Incheon 405-817 (KR)
(72) Inventor: DOH, Sung-Hwan, Bucheon-si Gyeonggi-do 420-760 (KR); LEE, Sang-Ho, Incheon 403-090 (KR); KWON, Cheol-Young, Incheon 402-851 (KR)
(74) Representative: Käck, Jürgen
(86) International application number: PCT/KR2009/001066
(87) International publication number: WO 2010/044519

(56) References cited:
- EP-A1- 1 742 504
- WO-A1-01/41322
- JP-A- 11 069 488
- JP-A- 11 215 592
- JP-A- 2003 033 724
- JP-A- 2006 013 571
- KR-A- 20050 044 828
- US-A1- 2004 208 338
- US-A1- 2005 180 592

## Description

### BACKGROUND OF THE INVENTION

### Field of the Invention

The present invention relates to a speaker, and more particularly, to a multi-function speaker, which provides vibration and acoustic functions at the same time.

### Description of the Related Art

Generally, speakers are acoustic devices in which an electrical signal is converted into kinetic energy at a magnetic circuit along a voice coil to generate a dilatational wave in air, thereby generating a sound wave. The speakers are widely used for mobile phones or various portable electronics.

Portable electronics such as a mobile phone includes a vibration module to inform an arrival signal or perform a bone conduction function. To realize miniaturization and cost reduction, multi-function speakers including a vibration function are being developed, and also widely used.

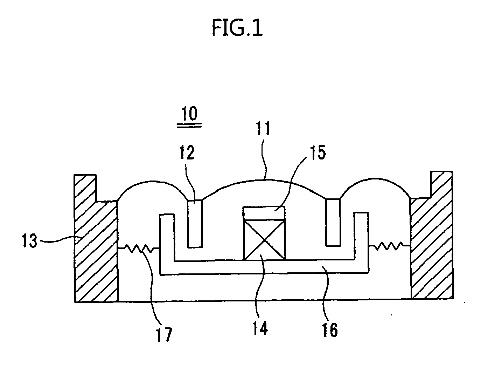

As shown in FIG. 1, a typical multi-function speaker 10 has a structure in which a diaphragm 11 to which a voice coil 12 is attached, a frame 13 supporting the diaphragm 11, and a vibrator including a plate 15, a magnet 14, and a yoke are supported to the frame 13 by a single suspension 17. According to the typical multi-function speaker 10, when a sound signal is inputted into the voice coil, the diaphragm 11 is vibrated to generate sound. Also, when a vibration signal is inputted, a vibration module is vertically vibrated.

However, in the typical multi-function speaker 10, unstable vibration (e.g., jumping phenomena, material fatigue properties, and rolling tendency) may be generated due to a single suspension, as well as, abnormal sound or noise may be generated due to an interference of a magnetic system when the vibrator and the diaphragm are vibrated at the same time.
EP 1 742 504 A1 discloses a speaker which is adapted to provide acoustic signals as well as vibration signals with the same voice coil. The voice coil is attached to a diaphragm, which is supported by a housing. A magnetic circuit is attached to a suspension supported by the housing. The coil is used to generate acoustic sounds by actuating the diaphragm and is also used to generate vibrations by actuating the magnetic circuit and the suspension carrying the magnetic circuit.
US 2005/0180592 A1 discloses a speaker which comprises a main speaker mechanism and a sub-speaker system. Each speaker system comprises a voice coil and both speaker systems are adapted to provide sounds. A magnetic assembly is attached to a suspension, wherein the suspension supported by a frame. The sub-speaker voice coil is attached to a vibrating plate and the main speaker voice coil is attached to a vibrating transmitting panel, which transmits generated vibrations to a protecting transparent panel. The transparent panel is a cover provided for liquid crystal display of a communication device and the main speaker system generates acoustic sound by vibrating the transparent panel. In case the sound pressure provided via panel is insufficient, e.g. due to a small size of the transparent panel, the sub-speaker system is activated.

The invention is defined in claim 1. Particular embodiments are set out in the dependent claims.

### SUMMARY OF THE INVENTION

Accordingly, the present invention is directed to a multi-function speaker that substantially obviates one or more problems due to limitations and disadvantages of the related art.

An object of the present invention is to provide a multi-function speaker that prevents abnormal vibration due to a suspension having dual stiffness with stiffnesses different from each other.

Another object of the present invention is to provide a multi-function speaker in which an internal frame and an external frame are divided to prevent abnormal vibration using a first suspension using a first suspension supporting a vibrator to the external frame and a second suspension supporting the internal frame to the external frame.

Another object of the present invention is to provide a multi-function speaker in which a voice coil and a vibration coil are separated, and magnetic poles thereof are changed to stabilize vibration.

Another object of the present invention is to provide a multi-function speaker in which a coupling method between a voice coil and a vibration coil is freely changed to easily realize desired impedance characteristics.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

There may be provided, as an example not falling under the scope of the claims, a suspension of a multi-function speaker including: an inside portion to which a vibrator is attached to generate vibration; and an outside portion fixed to a frame to stabilize the vibration of the vibrator, thereby preventing abnormal vibration, wherein the inside portion and the outside portion of the suspension have stiffnesses different from each other.

There may be provided, as an example not falling under the scope of the claims, a multi-function speaker including: an internal frame supporting a diaphragm to which a voice coil is attached; a first suspension having stiffnesses different from each other at inside and outside portions thereof to vibrate the inside portion attached to a vibrator and stabilize vibration of the vibrator at the outside portion; an external frame supporting the outside portion of the first suspension, the external frame receiving the internal frame in an inner space thereof; and a second suspension elastically coupling the internal frame to the external frame to buffer a movement of the internal frame, wherein, when the vibrator is vibrated, the first suspension prevents abnormal vibration and the second suspension buffers the movement of the internal frame to stabilize an operation of the vibrator in duplicate.

To achieve these objects and other advantages and in accordance with the purpose of the invention, as embodied and broadly described herein, according to claim 1, there is provided a multi-function speaker including: a diaphragm to which a voice coil is attached; an internal frame supporting the diaphragm; an internal magnet assembly comprising an internal upper plate, an internal magnet, and an internal lower plate; a vibration coil vertically disposed with respect to the voice coil in a gap between the internal frame and the internal magnet assembly; a first suspension in which the internal magnet assembly is attached to an inner center thereof, the first suspension being divided into an inside portion and an outside portion with respect to a position at which the vibration coil is attached to provide stiffnesses different from each other at the inside portion and the outside portion; an external frame supporting the first suspension, the external frame receiving the internal frame in an inner space therein; and a second suspension elastically coupling the internal frame to the external frame, wherein the voice coil and the vibration coil are disposed in a magnet circuit formed by the internal magnet assembly to provide an acoustic function by vibration of the diaphragm when current flows into the voice coil and a vibration function by vibration of the internal magnet assembly when current flows into the vibration coil.

The external upper plate of the external magnet assembly may have a height greater than that of the internal upper plate of the internal magnet assembly to increase a gap area, the outside portion of the first suspension may have stiffness greater than that of the inside portion of the first suspension, and a ratio of an inner length and an outer length may be changed to adjust a vibration characteristic.

The internal magnet assembly and the external magnet assembly are coupled in the same polarity to align the internal magnet assembly at an exact center of a space defined by the frame due to an repulsive force between the internal magnet assembly and the external magnet assembly, thereby maintaining a balance, and thus preventing abnormal vibration.

When the internal magnet assembly and the external magnet assembly are coupled in the same polarity, the internal magnet assembly may be aligned at a central position due to a repulsive force between the internal magnet assembly and the external magnet assembly.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a schematic view of a typical multi-function speaker;
FIG. 2 is an exploded perspective view of a multi-function speaker according to the present invention;
FIG. 3 is an assembled perspective sectional view of a multi-function speaker according to the present invention;
FIG. 4 is an assembled sectional view of a multi-function speaker according to the present invention;
FIG. 5 is a perspective view illustrating a process of assembling a multi-function speaker according to the present invention;
FIG. 6 is a perspective view of a multi-function speaker assembly according to the present invention;
FIG. 7 is a perspective sectional view of a multi-function speaker assembly according to the present invention; and
FIGS. 8 and 9 are partially sectional views explaining an operation of a multi-function speaker according to the present invention.

### DETAILED DESCRIPTION OF THE INVENTION

The present invention and technical subjects achieved by embodiments of the present invention will be clarified through following embodiments described with reference to the accompanying drawings. The following embodiments are used only for explain the present invention while not limiting the present invention.

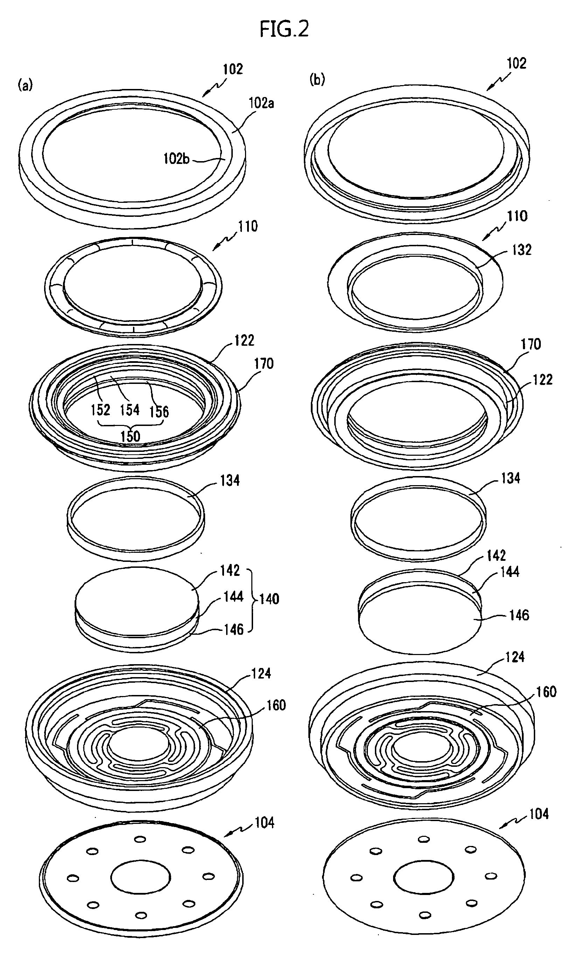

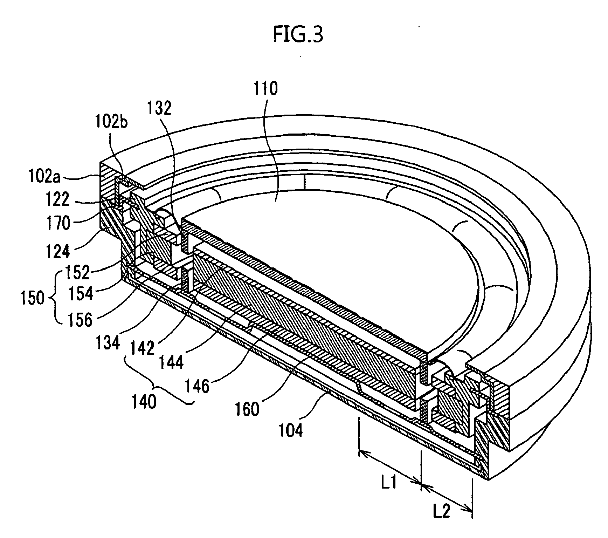

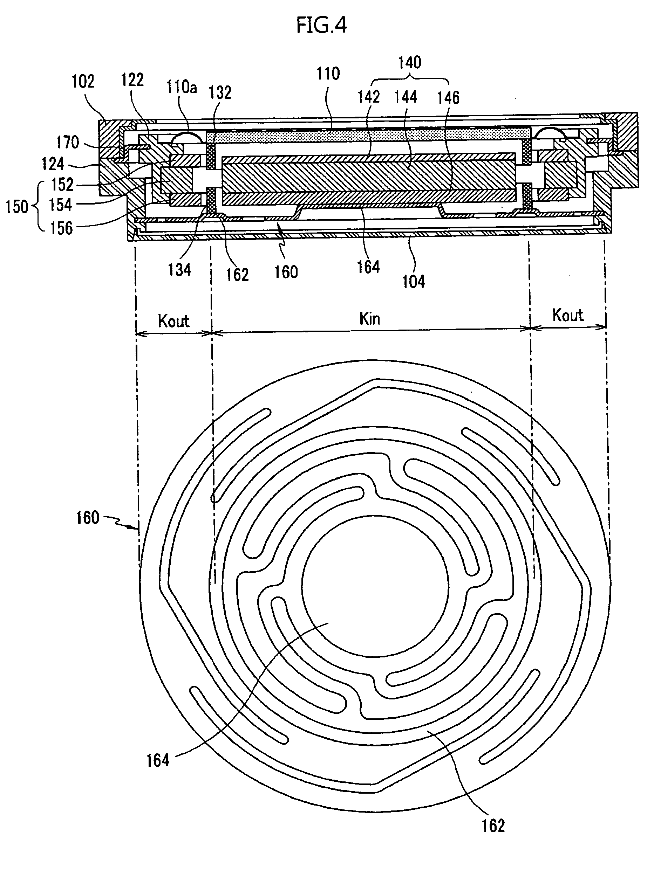

FIG. 2 is an exploded perspective view of a multi-function speaker according to the present invention. FIG. 2(a) is an exploded perspective view of the multi-function speaker when viewed from an upper side, and FIG. 2(b) is an exploded perspective view of the multi-function speaker when viewed from a lower side. FIG. 3 is a stereo perspective sectional view of a multi-function speaker according to the present invention, and FIG. 4 is an assembled sectional view of a multi-function speaker according to the present invention.

Referring to FIGS. 2 to 4, a multi-function speaker according to the present invention includes a front cover 102, a rear cover 104, a diaphragm 110 to which a voice coil 132 is attached, an internal frame 122 to which an external magnet assembly 150 is attached to the inside thereof and a second suspension 170 is attached to the outside thereof, a vibration coil 134, an internal magnet assembly 140, and an external frame 124 to which a first suspension 160 is attached to the inside thereof, which are integrally assembled. The multi-function speaker may provide an acoustic function in which the diaphragm 110 is vibrated by an electrical signal flowing into the voice coil 132 and a vibration function in which the internal magnet assembly 140 is vibrated by an electrical signal flowing into the vibration coil 134 at the same time. Since the internal magnet assembly 140 provides the vibration function, the internal magnet assembly 140 may be referred to as a "vibrator".

Referring to FIGS. 3 and 4, according to the multi-function speaker assembly of the present invention, the first suspension 160 is divided into an inside portion and an outside portion with respect to a first protrusion 162 to which the vibration coil 134 is attached. An outside stiffness Kout from the external frame 124 to the first protrusion 162 is different from an inside stiffness Kin from the first protrusion 162 to a second protrusion 164. That is, the outside stiffness Kout may be greater than the inside stiffness Kin (Kout > Kin). Thus, the inside portion of the first suspension 160 having a low stiffness may provide a function for smoothly vertically vibrating the vibrator 140 attached to the second protrusion 164 disposed at a central portion of the first suspension 160. The outside portion of the first suspension 160 may provide a function for uniformly supporting a circumference of the vibrator 140. As a result, it may prevent an abnormal vibration (e.g., twisted to the left and right sides) of the vibrator from occurring.

Also, in the multi-function speaker assembly of the present invention, the internal frame 122 and the external frame 124 are elastically coupled to each other by the second suspension 170 to allow the second suspension 170 to hole again the overall vibration of the second suspension 170, thereby generating more stable vibration.

Referring again to FIGS. 2 to 4, the front cover 102 has a ring shape with a wing in which the outside 120a thereof is formed of a plastic material and the inside 102b thereof is formed of a metal material. The front cover 102 is coupled to a front surface of the external frame 124. The rear cover 104 has a circular plate shape in which holes having small and large sizes are defined. The rear cover 104 is coupled to a back surface of the external frame 124 to protect internal components.

The diaphragm 110 has a circular plate shape formed of a composite material and having an outer circumference surface with a dome shape. A dome portion 110a of the outer circumference surface is supported by a hook of the internal frame 122. The voice coil 132 having a ring shape is attached to a bottom surface of the diaphragm 110.

The external frame 124 is elastically coupled to the outside of the internal frame 122 through the second suspension 170. The external magnet assembly 150 including an external upper plate 152, an external magnet 154, and an external lower plate 156 is closely attached to the inside of the internal frame 122. The internal magnet assembly 140 including an internal upper plate 142, an internal magnet 144, and an internal lower plate 146 is disposed at a center of a space defined by the internal frame 122 and supported by the second protrusion 164 of the first suspension 160. A gap is defined between the internal magnet assembly 140 and the external magnet assembly 150. The voice coil 132 and the vibration coil 134 are separately vertically disposed within the gap. At this time, the voice coil 132 is attached to the diaphragm 110, and the vibration coil 134 is attached to the first protrusion 162 of the first suspension 160.

The second suspension 170 fitted into the outside of the internal frame 122 is disposed on the hook of the external frame 124. The first suspension 160 having a dual-stiffness is coupled to a lower side of an inner surface of the external frame 124.

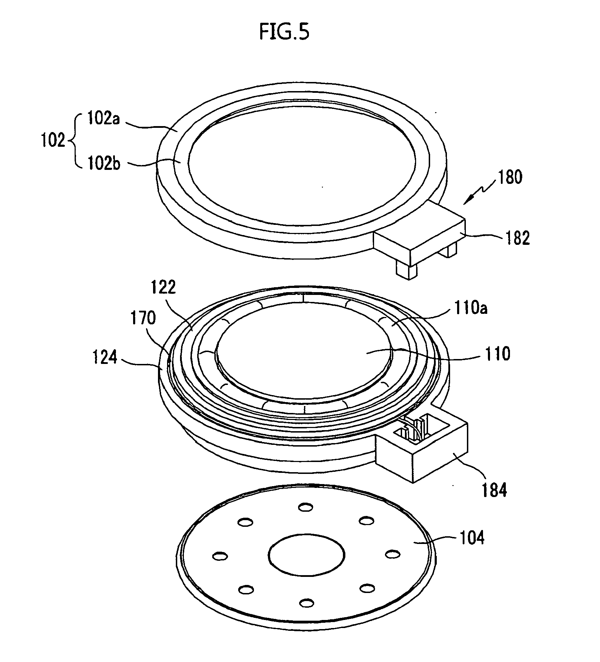

In the multi-function speaker of the present invention, the voice coil 132 and the vibration coil 134 are connected in series or parallel to each other to generate an electric field within a magnetic circuit according to an electrical signal applied from the outside. As shown in FIGS. 5 to 7, an actual product has a structure including a connection part 180 having a cylindrical and rectangular parallelepiped shape to connect electricity to the outside.

A process of manufacturing the multi-function speaker according to the present invention will be described now. The external magnet assembly 150 is the inside of the internal frame 122, and the second suspension 170 is attached to the outside of the internal frame 122. The internal frame 122 may be integrally manufactured using inserted injection molding. The diaphragm 110 to which the voice coil 132 is attached adheres on the internal frame 122 using an UV bonding to form a first sub-assembly. The external frame 124 is integrally manufactured with the first suspension 160 using the inserted injection molding. The vibration coil 134 and the internal magnet assembly 140 are attached on the first suspension 160 to form a second sub-assembly.

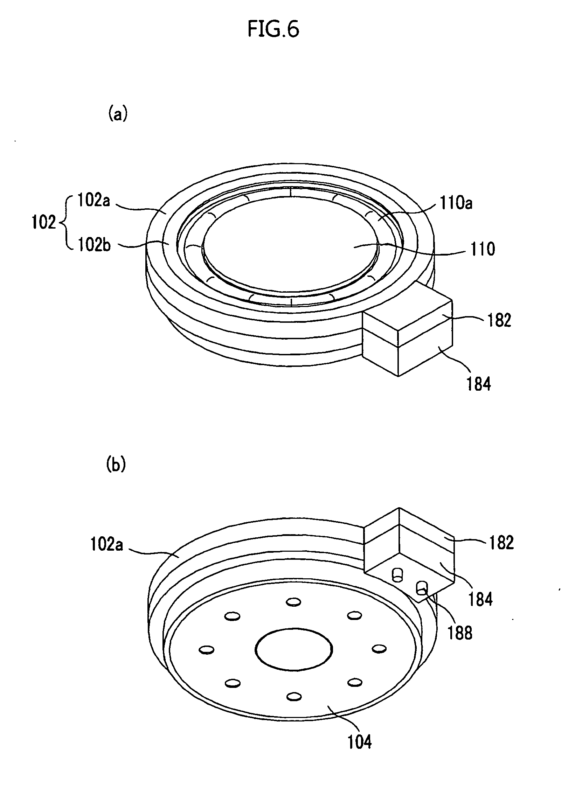

The first sub-assembly is inserted into the second sub-assembly, a coil is connected, and a soldering process is performed to form a third sub-assembly. When the front cover 102 is coupled to the rear cover 104 as shown in FIG. 5, the multi-function speaker assembly is completed as shown in FIG. 6. FIG. 6(a) is an assembled perspective view of the multi-function speaker when viewed from an upper side, and FIG. 6(b) is an assembled perspective view of the multi-function speaker when viewed from a lower side. Referring to FIG. 6, the multi-function speaker of the present invention is connected to an external device through an external connection terminal 188 such as a spring terminal of the connection part 180.

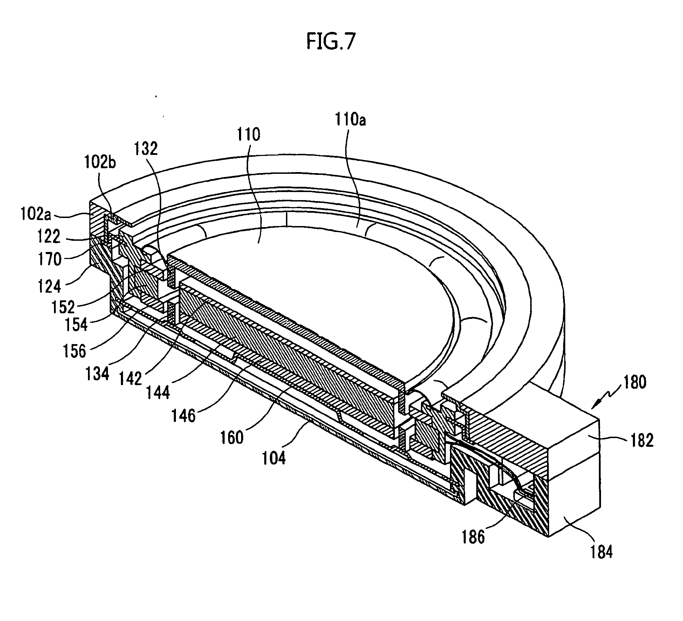

FIG. 7 is a perspective sectional view of a multi-function speaker assembly including the connection part 180. Referring to FIG. 7, the connection part 180 includes an connection terminal 186 for connecting the voice coil 132 to the vibration coil 134 in an inner space defined between an upper extension part 182 and a lower extension part 184. The multi-function speaker of FIG. 7 has the same configuration as that of FIG. 3 except the connection part 180. Thus, their detailed descriptions will be omitted.

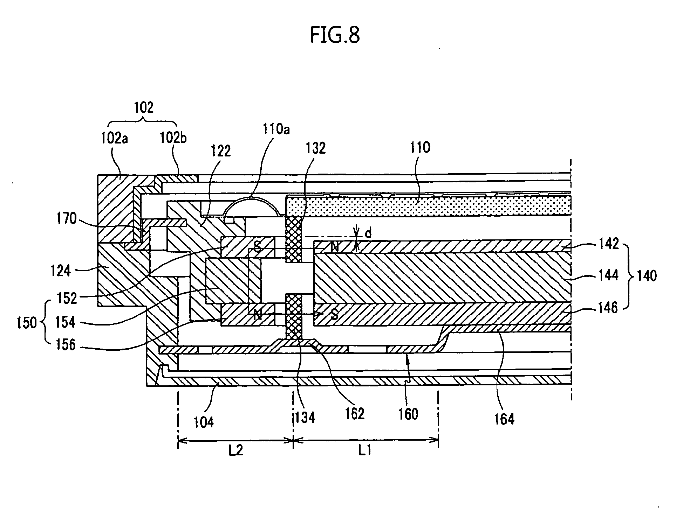

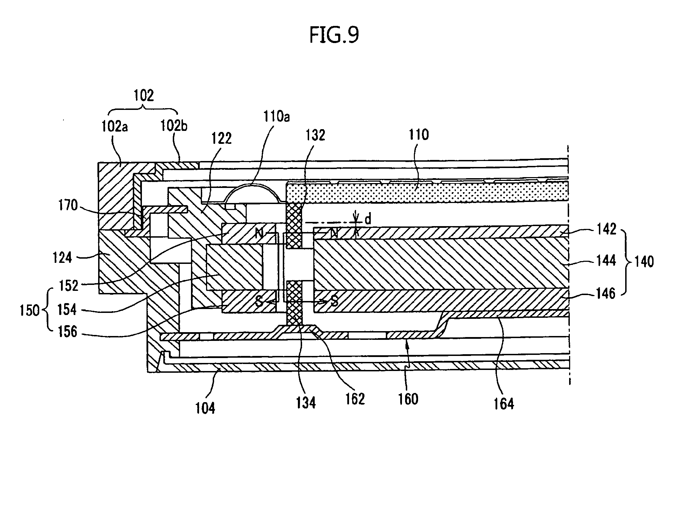

An operation principal of the completely assembled multi-function speaker according to the present invention will be described in detail with reference to FIGS. 8 and 9.

Referring to FIG. 8, in the multi-function speaker according to an embodiment of the present invention, the external magnet assembly 150 and the internal magnet assembly 140 respectively having polarities (N and S poles) different from each other are coupled to with a gap therebetween. Here, a magnetic circuit in which a magnetic force flows from the upper plate 142 of the internal magnet assembly to the lower plate 146 of the internal magnet assembly via the upper plate 152 of the external magnet assembly and the lower plate 156 of the external magnet assembly is formed. The voice coil 132 attached to the diaphragm 110 and the vibration coil 134 attached to the first suspension 160 are disposed in the gap. The upper plate 152 of the upper plate 152 of the external magnet assembly fixed to the internal frame 122 has a height greater than that of the upper plate 142 of the internal magnet assembly, which is vertically moved when operated, by a distance d to increase a "gap area". Thus, a magnetic field line of the magnetic circuit may be stable in spite of the vibration of the internal magnet assembly.

In this state, when the voice coil 132 and the vibration coil 134 are connected in series or parallel to each other to apply an electrical signal from the outside through the connection part 180, an electric field is generated by current flowing into the voice coil 132 disposed within the magnetic circuit to vibrate the diaphragm 110, thereby generating sound. Also, an electric field is generated by current flowing into the vibration coil 134 disposed within the magnetic circuit to vibrate the vibrator that is the internal magnet assembly 140. At this time, when the voice coil 132 and the vibration coil 134 are connected to in series, the voice coil 132 may serve as a low-frequency filter to transmit only a low frequency signal needed for the vibration to the vibration coil 134. That is, since a resonant frequency of the diaphragm 110 providing the general acoustic function is greater than that of the vibrator 140 providing the vibration function, only a signal having a lower frequency band is required during the vibration operation. Thus, when the voice coil 132 and the vibration coil 134 are connected to in series, the voice coil 132 may serve as the low frequency filter to remove noise.

In the multi-function speaker according to the present invention, the vibration is stably vibrated by the first suspension 160 having the dual stiffness. The inside portion of the first suspension 160 having a relatively low stiffness may provide a function for smoothly vertically vibrating the vibrator 140, and the outside portion of the first suspension 160 having a relatively high stiffness may provide a function for maintaining a balance of the vibration generated by the inner vibrator 140 to prevent an abnormal vibration (e.g., twisted to the left and right sides) of the vibrator from occurring.

The movements of the diaphragm 110 fixed to the internal frame 122 and the internal frame 122 are buffered again by the second suspension 170 to prevent the abnormal vibration from occurring. In addition, since the upper plate 152 of the external magnet assembly has a height greater than that of the upper plate 142 of the internal magnet assembly, the magnetic circuit may be stable to realize the stable vibration in spite of the vibration of the vibrator.

Furthermore, according to the present invention, a ratio of an inner length L1 and an outer length L2 of the first suspension 160 may be adequately adjusted to obtain a desired vibration characteristic. In addition, the external magnet assembly 150 may be removed or modified to obtain various characteristics.

Referring to FIG. 9, in a multi-function speaker according to another embodiment of the present invention, an external magnet assembly 150 and an internal magnet assembly 140 having the same polarity (e.g., N and N poles) as each other may be coupled with a gap therebetween to respectively form a magnetic circuit due to the internal magnet assembly 140 and a magnetic circuit due to the external magnet assembly 150. That is, the first magnetic circuit due to the internal magnet assembly 140 is formed from an upper plate 142 of the internal magnet assembly to a lower plate 146 of the internal magnet assembly via a voice coil 132 and a vibration coil 134. The second magnetic circuit due to the external magnet assembly 150 is formed from an upper plate 152 of the external magnet assembly to a lower plate 156 of the external magnet assembly. In this structure according to another embodiment, the internal magnet assembly may be aligned at an exact center of a space defined by a frame to maintain a balance, thereby preventing an abnormal vibration.

According to another embodiment of the present invention, the components for preventing the abnormal vibration in this embodiment has the same configuration and operation as those of the previously described embodiment except the magnetic circuit. Thus, their detailed descriptions will be omitted.

In the multi-function speaker according to the present invention, the inside of the first suspension may be smoothly vibrated by the first suspension in which the inside and outside thereof are stiffnesses different from each other, as well as, the outside of the first suspension is fixed to the frame to allow the vibrator to be stably vibrated, thereby prevent the abnormal vibration. Also, the second suspension in which the internal frame and the external frame are elastically coupled to each other may buffers the movement of the internal frame to stabilize the operation of the vibrator in duplicate.

Also, according to the present invention, since the external upper plate of the external magnet assembly has a height greater than that of the internal upper plate of the internal magnet assembly, the gap area may increase to stabilize the magnetic field line of the magnetic circuit in spite of the vibration of the internal magnet assembly. In addition, the voice coil and the vibration coil may be separately operated to stabilize the operation of the vibrator.

Also, according to the present invention, the ratio of an inner length and an outer length of the first suspension may be changed, or the connection method between the vibration coil and the voice coil and the coupling features of the internal magnet assembly and the external magnet assembly may be adjusted to obtain various characteristics.

It will be apparent to those skilled in the art that various modifications and variations can be made in the present invention. Thus, it is intended that the present invention covers the modifications and variations of this invention provided they come within the scope of the appended claims.

## Claims

1. A multi-function speaker comprising:
a voice coil (132);
a diaphragm (110) to which the voice coil (132) is attached;
an internal frame (122) supporting the diaphragm (110);
an internal magnet assembly (140) comprising an internal upper plate (142), an internal magnet (144), and an internal lower plate (146);
a vibration coil (134) vertically disposed with respect to the voice coil (132) in a gap between the internal frame (122) and the internal magnet assembly (140),
a first suspension (160) in which the internal magnet assembly (140) is attached to an inner center thereof, the first suspension being divided into an inside portion and an outside portion with respect to a position at which the vibration coil (134) is attached to provide stiffnesses (Kin, Kout) different from each other at the inside portion and the outside portion;
an external frame (124) supporting the first suspension (160), the external frame receiving the internal frame (122) in an inner space therein; and
a second suspension (170) elastically coupling the outside of the internal frame (122) to the external frame (124),
wherein the vibration coil (134) is attached to the first suspension (160);
and
wherein the voice coil (132) and the vibration coil (134) are disposed in a magnet circuit formed by the internal magnet assembly (140) to provide an acoustic function by vibration of the diaphragm (110) when current flows into the voice coil (132) and a vibration function by vibration of the internal magnet assembly (140) when current flows into the vibration coil (134).

2. The multi-function speaker of claim 1, further comprising an external magnet assembly (150) attached to the inside of the internal frame (122), the external magnet assembly (150) comprising an external upper plate (152), an external magnet (154), and an external lower plate (156),
wherein the voice coil (132) and the vibration coil (134) are disposed in a magnet circuit formed between the internal magnet assembly (140) and the external magnet assembly (150) to provide the acoustic function by the vibration of the diaphragm (110) when the current flows into the voice coil and the vibration function by the vibration of the internal magnet assembly when the current flows into the vibration coil.

3. The multi-function speaker of claim 2, wherein the external upper plate (152) of the external magnet assembly (150) has a height greater than that of the internal upper plate (142) of the internal magnet assembly (140).

4. The multi-function speaker of claim 2 or 3, wherein the internal magnet assembly (140) and the external magnet assembly (150) are coupled in the same polarity to align the internal magnet assembly at an exact center of a space defined by the frame (122) due to a repulsive force between the internal magnet assembly and the external magnet assembly, thereby maintaining a balance, and thus preventing abnormal vibration.

5. The multi-function speaker of any of claims 1 to 4, wherein the outside portion of the first suspension (160) has stiffness (Kᵢₙ, Kₒᵤₜ) greater than that of the inside portion of the first suspension.

6. The multi-function speaker of any of claims 1 to 5, wherein the voice coil (132) and the vibration coil (134) are connected to in series or parallel to each other to receive an electrical signal from the outside through the same connection terminal.

## Patentansprüche

1. Ein Multifunktions-Lautsprecher, der aufweist:
eine Schwingspule (132);
eine Membrane (110), an der die Schwingspule (132) befestigt ist;
einen inneren Rahmen (122) zum Stützen der Membrane (110);
eine innere Magnet-Baugruppe (140), die eine innere obere Platte (142), einen inneren Magneten (144) und eine innere untere Platte (146) aufweist;
eine Schwingungsspule (134), die auf die Schwingspule (132) bezogen vertikal in einem Spalt zwischen dem inneren Rahmen (122) und der inneren Magnet-Baugruppe (140) angeordnet ist;
eine erste Aufhängung (160), in deren innerem Zentrum die innere Magnet-Baugruppe (140) befestigt ist, wobei die erste Aufhängung unterteilt ist in ein Innenteil und ein Außenteil, und zwar bezogen auf eine Position, in der die Schwingungsspule (134) derart befestigt ist, dass voneinander unterschiedliche Steifigkeiten (Kin, Kout) am Innenteil und am Außenteil vorgesehen sind;
einen äußeren Rahmen (124) zum Stützen der ersten Aufhängung (160), wobei der äußere Rahmen in seinem Innenraum den inneren Rahmen (122) aufnimmt; und
eine zweite Aufhängung (170), die die Außenseite des inneren Rahmens (122) mit dem äußeren Rahmen (124) elastisch verbindet,
wobei die Schwingungsspule (134) an der ersten Aufhängung (160) befestigt ist; und
wobei die Schwingspule (132) und die Schwingungsspule (134) in einem von der inneren Magnet-Baugruppe (140) ausgebildeten magnetischen Kreis angeordnet sind, so dass eine Akustikfunktion durch Schwingung der Membrane (110) vorgesehen ist, wenn Strom in die Schwingspule (132) hineinfließt und eine Schwingungsfunktion durch Schwingung der inneren Magnet-Baugruppe (140) vorgesehen ist, wenn Strom in die Schwingungsspule (134) hineinfließt.

2. Der Multifunktions-Lautsprecher nach Anspruch 1, der weiterhin eine an der Innenseite des inneren Rahmens (122) befestigte äußere Magnet-Baugruppe (150) aufweist, wobei die äußere Magnet-Baugruppe (150) eine äußere obere Platte (152), einen äußeren Magneten (154) und eine äußere untere Platte (156) aufweist,
wobei die Schwingspule (132) und die Schwingungsspule (134) in einem von der inneren Magnet-Baugruppe (140) und der äußeren Magnet-Baugruppe (150) ausgebildeten magnetischen Kreis angeordnet sind, so dass die Akustikfunktion durch Schwingung der Membrane (110) vorgesehen ist, wenn Strom in die Schwingspule hineinfließt und die Schwingungsfunktion durch Schwingung der inneren Magnet-Baugruppe vorgesehen ist, wenn Strom in die Schwingungsspule hineinfließt.

3. Der Multifunktions-Lautsprecher nach Anspruch 2, wobei die äußere obere Platte (152) der äußeren Magnet-Baugruppe (150) eine größere Höhe hat als die der inneren oberen Platte (142) der inneren Magnet-Baugruppe (140).

4. Der Multifunktions-Lautsprecher nach Anspruch 2 oder 3, wobei die innere Magnet-Baugruppe (140) und die äußere Magnet-Baugruppe (150) über die gleiche Polarität gekoppelt sind, um die innere Magnet-Baugruppe an einem exakten Zentrum eines Raums auszurichten, das vom Rahmen (122) aufgrund einer Abstoßungskraft zwischen der inneren Magnet-Baugruppe und der äußeren Magnet-Baugruppe festgelegt wird, so dass ein Gleichgewicht aufrechterhalten und somit abnormale Schwingung verhindert wird.

5. Der Multifunktions-Lautsprecher nach irgendeinem der Ansprüche 1 bis 4, wobei die Steifigkeit (Kin, Kout) des Außenteils der ersten Aufhängung (160) größer ist als die des Innenteils der ersten Aufhängung.

6. Der Multifunktions-Lautsprecher nach irgendeinem der Ansprüche 1 bis 5, wobei die Schwingspule (132) und die Schwingungsspule (134) seriell oder parallel zueinander geschaltet sind, um ein elektrisches Signal von außerhalb durch den gleichen Anschluss zu empfangen.

## Revendications

1. Haut-parleur multifonction comprenant :
une bobine acoustique (132),
un diaphragme (110) auquel la bobine acoustique (132) est fixée,
une structure interne (122) supportant le diaphragme (110),
un ensemble d'aimant interne (140) comprenant une plaque supérieure interne (142), un aimant interne (144), et une plaque inférieure interne (146),
une bobine de vibration (134) disposée verticalement par rapport à la bobine acoustique (132) dans un espace entre la structure interne (122) et l'ensemble d'aimant interne (140),
une première suspension (160) dans laquelle l'ensemble d'aimant interne (140) est fixé à un centre intérieur de celle-ci, la première suspension étant divisée en une partie intérieure et une partie extérieure par rapport à une position à laquelle la bobine de vibration (134) est fixée pour fournir une rigidité (Kin, Kout) différente l'une par rapport à l'autre au niveau de la partie intérieure et de la partie extérieure,
une structure externe (124) supportant la première suspension (160), la structure externe recevant la structure interne (122) dans un espace intérieur dans celle-ci, et
une deuxième suspension (170) couplant de manière élastique l'extérieur de la structure interne (122) à la structure externe (124),
dans lequel la bobine de vibration (134) est fixée à la première suspension (160), et
dans lequel la bobine acoustique (132) et la bobine de vibration (134) sont disposées dans un circuit magnétique formé par l'ensemble d'aimant interne (140) pour fournir une fonction acoustique par une vibration du diaphragme (110) lorsque le courant circule dans la bobine acoustique (132) et une fonction vibratoire par une vibration de l'ensemble d'aimant interne (140) lorsque le courant circule dans la bobine de vibration (134).

2. Haut-parleur multifonction selon la revendication 1, comprenant en outre un ensemble d'aimant externe (150) fixé à l'intérieur de la structure interne (122), l'ensemble d'aimant externe (150) comprenant une plaque supérieure externe (152), un aimant externe (154), et une plaque inférieure externe (156),
dans lequel la bobine acoustique (132) et la bobine vibration (134) sont disposées dans un circuit magnétique formé entre l'ensemble d'aimant interne (140) et l'ensemble d'aimant externe (150) pour fournir la fonction acoustique par la vibration du diaphragme (110) lorsque le courant circule dans la bobine acoustique et la fonction vibratoire par la vibration de l'ensemble d'aimant interne lorsque le courant circule dans la bobine de vibration.

3. Haut-parleur multifonction selon la revendication 2, dans lequel la plaque supérieure externe (152) de l'ensemble d'aimant externe (150) a une hauteur supérieure à celle de la plaque supérieure interne (142) de l'ensemble d'aimant interne (140).

4. Haut-parleur multifonction selon la revendication 2 ou 3, dans lequel l'ensemble d'aimant interne (140) et l'ensemble d'aimant externe (150) sont couplés à la même polarité pour aligner l'ensemble d'aimant interne au niveau d'un centre exact d'un espace défini par la structure (122) en raison d'une force de répulsion entre l'ensemble d'aimant interne et l'ensemble d'aimant externe, en maintenant de cette manière un équilibre, et empêchant ainsi une vibration anormale.

5. Haut-parleur multifonction selon l'une quelconque des revendications 1 à 4, dans lequel la partie extérieure de la première suspension (160) a une rigidité (Kᵢₙ, Kₒᵤₜ) supérieure à celle de la partie intérieure de la première suspension.

6. Haut-parleur multifonction selon l'une quelconque des revendications 1 à 5, dans lequel la bobine acoustique (132) et la bobine vibration (134) sont connectées en série ou en parallèles l'une par rapport à l'autre pour recevoir un signal électrique provenant de l'extérieur à travers la même borne de connexion.
